Europäisches Patentamt

European Patent Office

Office européen des brevets

(11) Veröffentlichungsnummer: **0 267 531**
A2

## (12) EUROPÄISCHE PATENTANMELDUNG

(21) Anmeldenummer: 87116210.3

(22) Anmeldetag: 04.11.87

(51) Int. Cl.⁴: **B01D 3/06** , B01D 3/08 , B01D 1/00

(30) Priorität: 12.11.86 CH 4511/86

(43) Veröffentlichungstag der Anmeldung:
18.05.88 Patentblatt 88/20

(84) Benannte Vertragsstaaten:
DE FR GB NL SE

(71) Anmelder: **List AG**
**Muttenzerstrasse 107**
**CH-4133 Pratteln 2(CH)**

(72) Erfinder: **List, Jörg**
**St. Jakobstrasse 43**
**CH-4133 Pratteln(CH)**

(74) Vertreter: **EGLI-EUROPEAN PATENT**
**ATTORNEYS**
**Horneggstrasse 4**
**CH-8008 Zürich(CH)**

(54) **Eindampfverfahren für hochviskose Produkte.**

(57) Die Erfindung betrifft die Aufkonzentration der Lösung eines hochviskosen Produktes in einem Lösemittel mittels der Kombination einer Entspannungsverdampfung und einer Verdampfung durch indirekt von aussen zugeführter Wärme, dadurch gekennzeichnet, dass beide Eindampf-Verfahren in einem einzigen Mischkneter durchgeführt werden, der eine intensive Gutsbewegung in allen Viskositätsbereichen bis zu höchster Viskosität ermöglicht, mit besonderer Berücksichtigung einer sehr wirtschaftlichen Variante des Erhitzens der Ausgangslösung vor der Entspannung durch direkte Einführung eines Heizdampfs, dessen Kondensat im Mischkneter, getrennt vom viskosen Endprodukt, abgeführt wird.

Fig. 3

EP 0 267 531 A2

## Eindampfverfahren für hochviskose Produkte

Die Erfindung betrifft ein Verfahren und eine Apparatur zur Aufkonzentration der Lösung eines hochviskosen Produktes in einem Lösemittel, mittels der Kombination einer ersten Verdampfungsstufe durch Entspannung der bis unter den Siedepunkt erhitzten Lösung von einem höheren auf einen niedrigeren Druck bei Ausnutzung der sich hierbei ergebenden Unterschiede des Wärmeinhalts zwischen den Siedetemperaturen beider Druckstufen und einer anschliessenden Kontakteindampfung in der hochviskosen Phase, dadurch gekennzeichnet, dass die erste Stufe der Verdampfung des Lösemittels durch Entspannung und die zweite Stufe der Eindampfung durch Kontakt mit der wärmeübertragenden Fläche in einem einzigen Apparat mit intensiver Gutsbewegung sowohl in der niedrigviskosen als auch hochviskosen Phase durchgeführt wird.

Das Verfahren der Entspannungsverdampfung wird in der Verfahrenstechnik häufig angewendet. Hierbei wird eine Flüssigkeit, meist unter erhöhtem Druck, bis kurz vor den entsprechenden Siedepunkt erhitzt und dann anschliessend über ein Entspannungsventil in einen Raum niedrigeren Drucks entspannt, wobei die Temperaturdifferenz der Siedetemperatur beider Druckstufen und der damit gegebene Unterschied im Wärmeinhalt zum Verdampfen des Lösemittels benutzt wird.

Dieses auch apparativ einfache Verfahren wird häufig zum Aufkonzentrieren von Lösungen, zur Durchführung von Kristallisationsprozessen etc. verwendet. Es ist jedoch dadurch begrenzt, dass die aufkonzentrierte Flüssigkeit so niedrigviskos und nicht klebend sein muss, dass sie laufend aus dem Entspannungsraum abgezogen werden kann. Bei hochviskosen und klebrigen Produkten ist es notwendig, in einer nachfolgenden zweiten Stufe durch indirekte Zuführung der Verdampfungswärme das hochviskose Produkt weiter aufzukonzentrieren oder nach einer hochviskosen Zwischenphase zu rieselfähigem Produkt zu trocknen. Im hochviskosen Bereich ist es notwendig, das Produkt hierbei intensiv zu mischen und zu kneten.

Es wurde nun gefunden, dass beide Prozess-Stufen zweckmässig und einfach in einem einzigen Apparat durchgeführt werden können, d.h. dass Entspannung und Kontaktverdampfung dort erfolgen, vorausgesetzt, dass dieser Apparat sowohl bezüglich der Wärmeübertragungsflächen als auch der Verweilzeit, der Selbstreinigung für die intensive Gutsbewegung in dem Produkt die notwendigen Voraussetzungen für diesen Prozess hat. Diese Durchführung des zweistufigen Prozesses in einem einzigen Mischkneter hat den bedeutenden Vorteil, dass man hinsichtlich der Viskosität und damit des Anteils der Entspannungsverdampfung nicht mehr begrenzt ist.

Für das Erhitzen der Ausgangslösung vor dem Entspannen wurden bisher allgemein nur indirekte Kontaktwärmetauscher verwendet. Die vorliegende Erfindung vereinfacht auch diesen Erhitzungsprozess mittels Zuführung der Wärme durch eine direkte Vermischung der Ausgangslösung mit einem geeigneten Dampf.

Die Erfindung ist in den beiliegenden Zeichnungen dargestellt. Es zeigen:

Fig. 1 Fliesschema einer Apparatur mit Kontaktwärmetauscher, einem Mischkneter mit Austrags-Extruder sowie dem Brüdenabzug und der Kondensation der Brüden.

Fig. 2 Querschnitt der Fig. 1 nach Linien I-II.

Fig. 3 Schema einer Apparatur mit Aufheizung der Ausgangslösung durch direkte Dampfzuführung, dem Mischkneter für Entspannung und Kontaktverdampfung, einem Austrag mittels Kammerschleusen und der Brüdenkondensation, sowie einem Kondensatablass für das Heizdampfkondensat.

Fig. 4 Schema eines Heizsystems mit direkt zugeführtem Heizdampf in einem mechanischen Mischer.

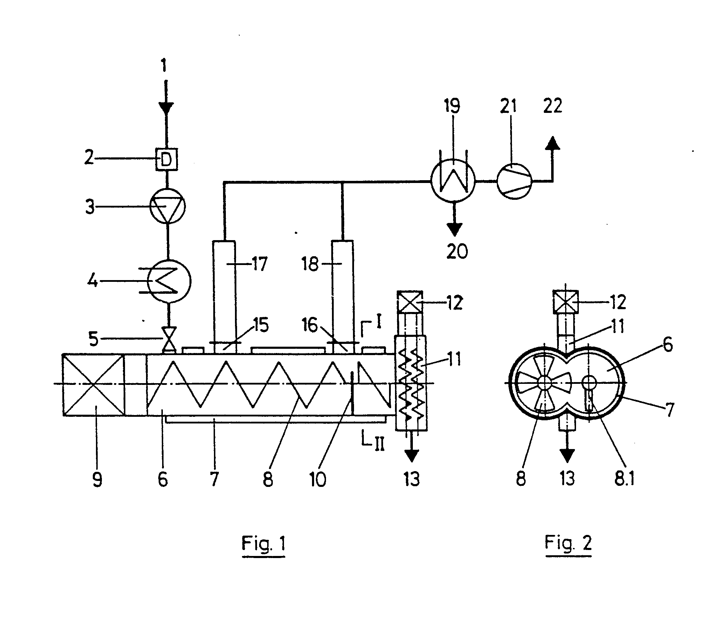

Fig. 1 zeigt das Grundschema des Verfahrens und einer Apparatur. Die Ausgangslösung 1 wird von der Dosiereinrichtung 2 der Pumpe 3 aufgegeben und im Wärmetauscher 4 auf eine Temperatur gebracht, die kurz unterhalb der Siedetemperatur liegt, die dem gewünschten Vordruck entspricht. Die erhitzte Ausgangslösung wird über Entspannungsventil 5 direkt in den Mischkneter 6 mit Heizmantel 7 und dem Knetrührer 8 mit Antrieb 9 hinein entspannt. Bei der Entspannung verdampft der erste Teil des Lösemittels. Die hierdurch bereits aufkonzentrierte Lösung wird durch den Mischkneter transportiert, dort durch Zuführung von weiterer Wärme im Heizmantel 7 bis zum gewünschten hochviskosen Endzustand ausgedampft und mittels Extruder 11 mit Antrieb 12 und Auslaufstutzen 13 ausgetragen. 10 ist eine Stauscheibe, die das Füllvolumen im Mischkneter bestimmt. Die Lösemittelbrüden werden im vorliegenden Fall durch die Stutzen 15 und 16 mit dem jeweiligen Dom 17 und 18 abgesogen und im Kondensator 19 verflüssigt. 21 ist eine Vakuumpumpe, die den gewünschten Unterdruck im Entspannungsraum aufrechterhält und die inerten Gase bei 22 abführt. Das Lösemittelkondensat läuft aus dem Kondensator 19 durch Stutzen 20 ab. Das im vorliegenden Fall hochviskose Produkt bildet am Ausgang 13 des Extruders 11 einen sich immer erneuerten dichten Produktstopfen, der als Schleuse zwischen dem Entspannungsraum 6 und der Atmosphäre dient.

Auf der Eintrittsseite hat das Entspannungsventil 5 die ähnliche Schleusenwirkung, sodass im Mischkneter 6 mit Vakuum gearbeitet werden kann. Der Mischkneter 6 erfüllt in diesem Falle sowohl die Funktion als Entspannungsraum für die erste Stufe der Verdampfung als auch die Funktion eines Kontaktverdampfers als zweite Prozess-Stufe.

Im Mischkneter 6 wird durch die Verdampfung des Lösemittels das Produkt vom Entspannungsventil bis zum Austritt immer viskoser, wobei eine gute Misch-und Knetwirkung für den Wärmeübergang von sehr grosser Bedeutung ist.

Der Querschnitt Fig. 2 der Fig. 1 zeigt einen Mischkneter gemäss dem Deutschen Patent 2012294 mit zwei ineinander kämmenden Knetrührern, die die Anforderungen der intensiven Gutsbewegung sehr gut erfüllen:
-durch Mischen und Kneten sowohl in der niedrigviskosen als auch der hochviskosen Phase,
-durch gute Selbstreinigung, grosse Wärmeübertragungsflächen und genügende Verweilzeit. •

Grundsätzlich können auch andere Mischkneter Verwendung finden, die diesen Ansprüchen genügen.

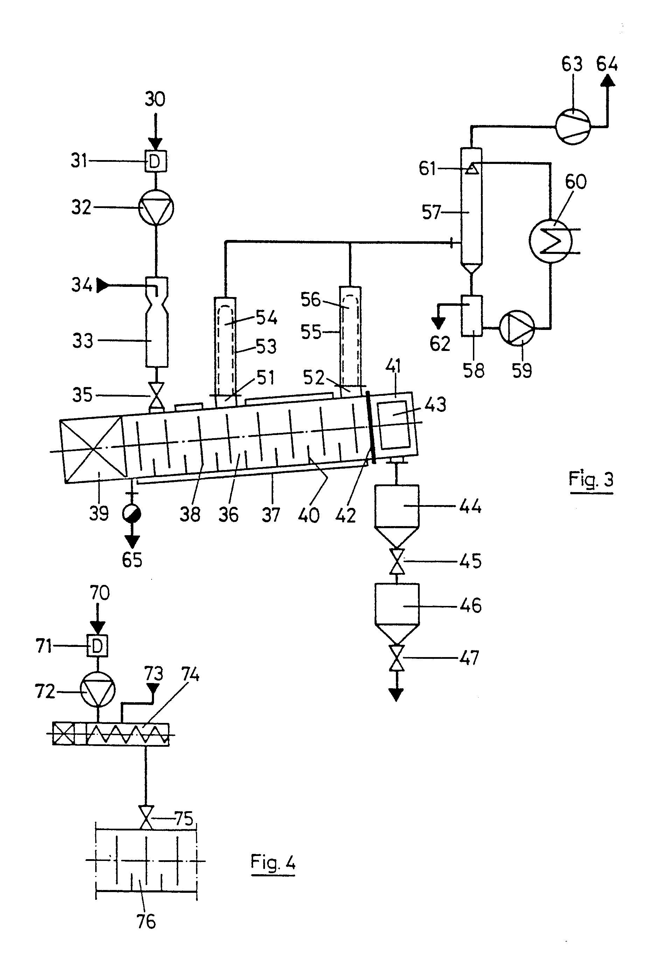

Fig. 3 zeigt das Fliesschema einer Apparatur mit der Aufheizung der Ausgangslösung durch Eindüsen von direktem Dampf. Die dort gezeigte Austragsvorrichtung mit einer Doppelkammerschleuse ist ein Beispiel für die Austragung eines Produktes, das bei kompletter Verdampfung des Lösemittels nach einer viskosen Zwischenphase in ein rieselfähiges Pulver zerfällt. Die Ausgangslösung 30 wird mit dem Dosiergerät 31 dosiert und mit der Pumpe 32 dem Erhitzer 33 zugeführt. Die Aufwärmung auf die gewünschte Temperatur erfolgt durch Eindüsen des Dampfs 34 mit einer intensiven Vermischung von Dampf und Flüssigkeit.

Die so aufgeheizte Ausgangslösung wird über das Entspannungsventil 35 direkt in den Mischkneter 36 mit Heizmantel 37, Knetrührer 38 und Antrieb 39 sowie Knethaken 40 entspannt, wobei wie bereits beschrieben, ein Teil des Lösemittels verdampft.

Die Resteindampfung des Lösemittels erfolgt durch direkten Kontakt mit den beheizten Wärmeübertragungsflächen des Mischkneters, wobei das Gehäuse 36 mit Heizmantel 37 aber auch der Knetrührer 38 beheizt sind. Auf dem Weg vom Entspannungsventil bis zum Austragsgehäuse 41 erhöht sich die Viskosität des Produktes laufend. Im vorliegenden Fall einer Trocknung passiert das Produkt zuerst einen hochviskos - pastösen Zustand und zerfällt dann in ein rieselfähiges, trockenes Produkt und fällt über die Stauplatte 42 für die Einstellung der Füllhöhe im Mischkneter in das Austragsgehäuse 41 und wird durch die Rührelemente 43 in den Zwischenbehälter 44 ausgetragen. Während der Arbeitsperiode fällt das rieselfähige Produkt durch den geöffneten Schleusenschieber 45 in den Schleusenbehälter 46 mit zunächst geschlossenem Auslaufschieber 47. Ist die gewünschte Füllhöhe in dem Behälter 46 erreicht, wird der Einlaufschieber 45 geschlossen, der Behälter 46 auf Atmosphärendruck gebracht und das Produkt durch Oeffnen des Schiebers 47 ausgetragen. Nach erfolgter Leerung wird der Schieber 47 geschlossen und der Behälter 46 wieder auf den gleichen Druck gebracht, der in dem Mischkneter 36 vorhanden ist. Schieber 45 kann nunmehr geöffnet werden, sodass das Produkt wieder normal in den Schleusenbehälter 46 fällt. Der Behälter 44 dient lediglich als Pufferbehälter für die Zeit des Austragens des Schleusenbehälters 46.

Die Brüden werden über die Brüdenstutzen 51 und 52 und die Dome 53 und 55 mit den Filtern 54 und 56 für die Abtrennung von Staub abgeführt. Die Kondensation der Brüden erfolgt im Mischkondensator 57 durch Einspritzen von gekühltem Kondensat, das in Behälter 58 gesammelt wird und mittels Pumpe 59 über den Kühler 60 in Düse 61 versprüht wird. Das Kondensat wird im Ueberlauf 62 weggeführt. Die inerten Gase werden mit Vakuumpumpe 63 abgesaugt und verlassen das System bei 64.

Wird für das Aufheizen der Ausgangslösung als Heizmittel der Dampf eines Lösemittels mit ähnlichem Siedepunkt wie das Lösemittel der Ausgangslösung benutzt, werden die Dämpfe in einfacher Form mit den Brüden zusammen abgeführt, verflüssigt und soweit notwendig später getrennt.

Wesentlich effektiver kann es jedoch sein, die Ausgangslösung mit einem Dampf aufzuheizen, der einen hohen Wärmeinhalt besitzt und einen höheren Siedepunkt als das Lösemittel der Ausgangslösung hat und mit diesem Lösemittel nicht mischbar ist, z.B. Wasserdampf. Infolge des höheren Siedepunktes kondensiert dieser Heizdampf bereits im Erhitzer 33 und wird im Mischkneter 36 durch den Stutzen 65 mittels einer geeigneten Vorrichtung, z.B. einen Kondenstopf, ausgeschleust, während die Lösemittelbrüden den Mischkneter gasförmig verlassen. Eine schwache Schrägstellung des Mischkneters erleichtert den Abfluss des Wasserdampf-Kondensats nach dem Auslauf 65.

In der Fig. 3 ist schematisch ein Mischkneter mit nur einem Knetrührer in einem zylindrischen Gehäuse gezeigt, wobei im Gehäuse Knethaken gemäss dem Deutschen Patent 2349106 als Gegenwerkzeuge befestigt sind.

Beispiel:

Aufgabe: Aufkonzentrieren einer 30 %igen Lösung von Kunststoff in Hexan auf 99 %.

Als Aufheizmittel wird direkter Wasserdampf benutzt, der die Ausgangslösung im Erhitzer 33 bei einem Druck von 3 bar auf 100 °C erwärmt. Die Entspannung erfolgt im Mischkneter 36 bei einem Druck von 0,15 bar und einer Produkttemperatur von 30 °C. Das durch Kondensation im Erhitzer 33 entstandene Wasser wird bei 36 ausgeschleust, während die Hexanbrüden dampfförmig im Brüdensystem abgeführt und anschliessend kondensiert werden.

Fig. 4 zeigt das Vermischen des Heizdampfs mit der Ausgangslösung mit einem mechanisch angetriebenen Mischer 74. Die Ausgangslösung 70 wird über Dosierung 71 und Pumpe 72 durch den mechanischen Mischer 74 durchgepumpt und dort durch den bei 73 zugeführten Heizdampf aufgeheizt. Die aufgeheizte Ausgangslösung wird dann über das Entspannungsventil 75, wie bereits geschildert, direkt in einen hier nur als Längsabschnitt gezeigten Mischkneter 76 hinein entspannt.

Die Auswahl des geeignetsten Apparates für die mechanische Vermischung von Ausgangslösung und Heizdampf muss jeweils den Eigenschaften des Produktes angepasst werden. Dies trifft auch zu für die indirekte Aufheizung des Produktes, für die alle Arten von Wärmetauscher wie Röhrenwärmetauscher, Plattenwärmetauscher etc. verwendet werden können. Die Austragsorgane aus dem Mischkneter können Extruder z.B. für Kunststoffschmelzen aber auch Kammerschleusen, Doppelpendelschleusen usw. für rieselfähige Produkte sein.

**Ansprüche**

1. Verfahren zur Aufkonzentration der Lösung eines hochviskosen Produktes in einem Lösemittel, mittels der Kombination einer ersten Verdampfungsstufe durch Entspannung der bis unter dem Siedepunkt erhitzten Lösung von einem höheren auf einen niedrigeren Druck bei Ausnutzung der sich hierbei ergebenden Unterschiede des Wärmeinhalts zwischen den Siedetemperaturen beider Druckstufen und einer anschliessenden Kontakteindampfung in der hochviskosen Phase, mittels Kontakt an beheizten Flächen, dadurch gekennzeichnet, dass die erste Stufe der Verdampfung des Lösemittels durch Entspannung und die zweite Stufe der Eindampfung durch Kontakt mit der wärmeübertragenden Fläche in einem einzigen Apparat der unbegrenzt eine intensive Gutsbewegung in allen Viskositätsbereichen von niedriger Viskosität bis zu hoher Viskosität und im Feststoffbereich ermöglicht.

2. Verfahren nach Patentanspruch 1, dadurch gekennzeichnet, dass die Erhitzung der Lösung vor der Entspannung ganz oder teilweise durch direkte Mischung mit einem Heizdampf erfolgt.

3. Apparatur zur Durchführung der Patentansprüche 1 und 2, bestehend aus einer Dosiervorrichtung, die die niedrigviskose Ausgangslösung einem Wärmetauscher zuführt, in dem sie auf eine Temperatur knapp unter dem Siedepunkt erhitzt wird, wobei zur Erhöhung des Siedepunktes die Lösung im Wärmetauscher durch eine Pumpe unter Druck gesetzt werden kann, dadurch gekennzeichnet, dass die erhitzte Ausgangslösung über ein Entspannungsventil direkt einem Mischkneter aufgegeben und dort auf einen niederen Druck entspannt wird, wobei ein erster Teil des Lösemittels durch Entspannung verdampft und dass anschliessend in dem selben Mischkneter die durch Entspannung aufkonzentrierte Lösung unter intensiver Gutsbewegung durch Mischen und Kneten mit von aussen indirekt zugeführter Wärme, unter Verdampfung des restlichen Lösemittels, bis zur gewünschten hochviskosen Endkonzentration gebracht wird.

4. Apparatur zur Durchführung des Verfahrens nach Patentansprüchen 1, 2 und 3, dadurch gekennzeichnet, dass die Aufheizung der Ausgangslösung vor der Entspannung mindestens teilweise durch direkte Einleitung eines Heizdampfs erfolgt, welcher mit dem Lösemittel und dem Feststoff nur sehr gering mischbar ist, nicht reagiert und einen höheren Siedepunkt als das Lösemittel hat, mit dem Ziel, dass durch geeignete Temperaturführung das Kondensat des Heizdampfs im Mischkneter selbst flüssig bleibt, sich abscheidet und abgeführt wird, sodass die Brüden überwiegend nur Lösemitteldampf enthalten, der in bekannter Weise dampfförmig den Mischkneter verlässt und getrennt kondensiert wird.

5. Apparatur zur Ausführung des Verfahrens nach Patentansprüchen 1 bis 3, dadurch gekennzeichnet, dass zur direkten Aufheizung der Lösung Heizdampf benutzt wird, der einen ähnlichen Siedepunkt wie das Lösemittel hat und im Mischkneter zusammen mit den anderen Brüden abgeführt wird.

6. Kneter zur Durchführung des Verfahrens gemäss Patentansprüchen 1 bis 5, dadurch gekennzeichnet, dass eine intensive Gutsbewegung in einem weiten Bereich der verschiedenen Viskositäten der einzelnen Konzentrationen erreicht wird, dass die Heizflächen weitgehend selbständig gereinigt werden, genügend freier Raum zur Abführung der Lösemittelbrüden vorhanden, und eine genügend lange Verweilzeit des Produkts möglich ist.

7. Verfahren und Apparatur gemäss Patentansprüchen 1 bis 6, dadurch gekennzeichnet, dass als Austragsvorrichtung für das hochviskose Produkt ein Extruder direkt am Austragskopf des Mischkneters angeordnet ist.

8. Apparatur nach Patentansprüchen 1 bis 6, bei der das Endprodukt als rieselfähger Feststoff anfällt, dadurch gekennzeichnet, dass der Austrag des rieselfähigen Produkts mittels einer semikontinuierlich betriebenen Kammerschleuse erfolgt.

Fig. 1

Fig. 2

Fig. 3

Fig. 4